# EUROPÄISCHE PATENTSCHRIFT

(11) **EP 1 097 841 B1**
(45) Veröffentlichungstag und Bekanntmachung des Hinweises auf die Patenterteilung: **15.11.2006**
(21) Anmeldenummer: 00119238.4
(22) Anmeldetag: 06.09.2000
(51) Int. Cl.: B60Q 3/02

(54) **Innenleuchtenanordnung**
Interior lighting arrangement
Arrangement pour éclairage intérieur

(30) Priorität: 13.10.1999 DE 19949264
(43) Veröffentlichungstag der Anmeldung: 09.05.2001
(73) Patentinhaber: Hella KGaA Hueck & Co., 59552 Lippstadt (DE)
(72) Erfinder: Pietzonka, Steffen, Dipl.-Ing., 59555 Lippstadt (DE); Nachtigall, Klaus, Dipl.-Ing., 79199 Kirchzarten (DE)
(74) Vertreter: Patent- und Rechtsanwaltssozietät Maucher, Börjes & Kollegen

(56) Entgegenhaltungen:
- EP-A- 0 584 592
- DE-A- 19 845 135
- DE-C- 4 309 492
- DE-U- 9 402 854

## Beschreibung

Die Erfindung betrifft eine Funktionsbaugruppenanordnung zum Anbringen an der Innenseite eines Kraftfahrzeuges, insbesondere am Dachhimmel, wobei die Funktionsbaugruppenanordnung wenigstens zwei unterschiedliche elektrische und/oder elektronische Funktionsbaugruppen aufweist, von denen zumindest eine als Innenleuchte ausgebildet ist.

Eine solche gattungsgemäße Funktionsbaugruppenanordnung ist aus DE 197 39 075 A1 bekannt. Sie weist ein Gehäuse auf, in dem mehrere unterschiedliche elektrische und/oder elektronische Funktionseinheiten, wir zum Beispiel eine Innenleuchte, Leseleuchten, Helligkeitssensoren, Mikrophone sowie Taster zum Betätigen der Innenleuchte, der Leseleuchten und eines Schiebedachs angeordnet sind. Dabei sind die einzelnen Funktionseinheiten jeweils an vorbestimmten Stellen in dem für die Funktionseinheiten gemeinsam vorgesehenen Gehäuse angeordnet. Die vorbekannte Funktionsbaugruppenanordnung ermöglicht zwar eine vergleichsweise dicht gepackte Anordnung der unterschiedlichen Funktionseinheiten in dem Gehäuse, hat jedoch den Nachteil, daß für Fahrzeuge, die mit Funktionsbaugruppenanordnungen ausgestattet werden sollen, die unterschiedliche Funktionseinheiten aufweisen, jeweils unterschiedliche Funktionsbaugruppenanordnungen vorgesehen sein müssen. Für eine entsprechend große Variantenvielfalt unterschiedlich ausgestatteter Kraftfahrzeuge ist deshalb eine entsprechend große Anzahl unterschiedlichen Funktionsbaugruppenanordnungen erforderlich. Da die Entwicklung, Herstellung und Lagerung dieser unterschiedlich ausgestatteten Funktionsbaugruppenanordnungen vergleichsweise aufwendig ist, muß die Anzahl der Funktionsbaugruppenanordnungen in der Praxis entsprechend reduziert werden, das heißt es können nur einige wenige Standardvarianten angeboten werden. Diese entsprechen jedoch häufig nicht den Bedürfnissen und Wünschen der jeweiligen Fahrzeugbenutzer. Ungünstig ist außerdem, daß ein nachträgliches Aufrüsten der Funktionsbaugruppenanordnung durch Hinzufügen einer zusätzlichen Funktionseinheit praktisch nicht oder nur mit vergleichsweise großem Aufwand möglich ist. In der Regel ist zum Hinzufügen einer weiteren Funktionseinheit der Austausch der kompletten Funktionsbaugruppenanordnung erforderlich, das heißt die bereits vorhandenen Funktionseinheiten können dann nicht weiterbenutzt werden und müssen ebenfalls ausgetauscht werden.

Aus DE 43 09 492 C1 ist auch bereits eine Dachinnenkonsole für Kraftfahrzeuge, insbesondere für von Personenkraftwagen abgeleitete Einsatzfahrzeuge, bekannt, über die mehrere unterschiedliche elektrische und/oder elektronische Funktionseinheiten indirekt miteinander verbunden sind. Dabei weist die Dachinnenkonsole mehrere, in abgesenkten Vertiefungen angeordnete Ausschnitte auf, die Trägerplatten aufnehmen, hinter denen die Funktionseinheiten angeordnet sind. Die einzelnen Ausschnitte sind je nach Art des Kraftfahrzeugs mit unterschiedlichen Funktionseinheiten bestückbar, beispielsweise bei einem Taxi mit einem Taximeter und bei einem Polizeifahrzeug mit einem Videomonitor zur Verkehrsüberwachung. Die vorbekannte Dachinnenkonsole hat jedoch den Nachteil, daß die Anzahl, die Abmessungen und die Anordnung der Ausschnitte zum Aufnehmen der Trägerplatten durch die Dachinnenkonsole vorgegeben ist. Außerdem sind die Abmessungen der Innenkonsole für die maximale Bestückung mit Funktionseinheiten ausgelegt, wodurch sich bei Kraftfahrzeugen, bei denen nur einige der Ausschnitte der Dachinnenkonsole mit Funktionseinheiten bestückt werden, eine größere Dachinnenkonsole ergibt, als dies für eine kompakte Unterbringung der Funktionseinheiten erforderlich ist.

Aus DE 42 36 411 A1 ist ferner eine Einrichtung zur Komfortversorgung in Reisebussen bekannt, die aus mehreren Steckmodulen zusammengesetzt ist, die in Fahrzeuglängsrichtung hintereinander angeordnet sind und jeweils einem Fahrgastplatz zugeordnet sind. Die einzelnen Steckmodule weisen jeweils mehrere Funktionseinheiten auf, nämlich Leselampen, Ausströmer für Luft, Bedienschalter zur Programmwahl einer Audio-Einrichtung, Kopfhörerbuchsen und Lautsprecher. Dabei weisen alle Steckmodule jeweils die gleichen Funktionseinheiten auf. Somit ist auch bei dieser Einrichtung eine individuelle Bestückung der Steckmodule mit unterschiedlichen Funktionseinheiten nicht vorgesehen. Ungünstig ist außerdem, daß eine Nachrüstung der Steckmodule mit weiteren Funktionseinheiten nicht oder nur mit vergleichsweise großem Aufwand möglich ist.

Es besteht deshalb die Aufgabe, eine Funktionsbaugruppenanordnung der eingangs genannten Art zu schaffen, die mehrere unterschiedliche Varianten ermöglicht, die aber dennoch kompakt aufgebaut ist und jeweils nur den Platz benötigt, der für die Funktionseinheiten der Funktionsbaugruppenanordnung erforderlich ist.

Die Lösung dieser Aufgabe besteht darin, daß die Funktionsbaugruppenanordnung ein Grundmodul hat, das an wenigstens einer Seite zumindest ein Steckverbindungsteil aufweist und daß zumindest eine der Funktionsbaugruppen zum direkten elektrischen und mechanischen Verbinden mit dem Grundmodul als Steckmodul mit einem zu dem Steckverbindungsteil des Grundmoduls passenden, auf dieses Steckverbindungsteil aufsteckbaren Gegensteckverbindungsteil ausgebildet ist.

In vorteilhafter Weise ist es dadurch möglich, unterschiedliche Varianten der Funktionsbaugruppenanordnung vorzusehen, beispielsweise eine Basisversion, die nur aus dem Grundmodul besteht und eine besser ausgestattete Version, die zusätzlich noch über wenigstens ein Steckmodul mit mindestens einer weiteren elektrischen und/oder elektronischen Funktion verfügt. Dabei benötigen diese unterschiedlichen Funktionsbaugruppenanordnungen jeweils nur den Platz, der für die vorhandenen Funktionseinheiten der Funktionsbaugruppenanordnung erforderlich ist.

In vorteilhafter Weise ist es sogar möglich, ein Kraftfahrzeug, das ursprünglich nur mit dem Grundmodul ausgestattet war, nachträglich aufzurüsten, indem auf das Grundmodul ein oder mehrere Steckmodule aufgesteckt werden. Dabei könnten gegebenenfalls mehrere unterschiedliche Steckmodule vorgesehen sein, die zum wahl- oder wechselweisen Verbinden mit dem Grundmodul jeweils ein zu dem Steckverbindungsteil des Grundmoduls passendes, auf dieses Steckverbindungsteil aufsteckbares Gegensteckverbindungsteil aufweisen. Dabei ist es sogar möglich, daß das Grundmodul selbst keine Funktionsbaugruppe aufweist und daß gegebenfalls sämtliche Funktionsbaugruppen als mit dem Grundmodul whl- oder wechselweise verbindbare Steckmodule ausgebildet sind. Somit ergibt sich ein Bausatz, mit dem auf einfache Weise verschiedene, über unterschiedliche Funktionen verfügende Funktionsbaugruppenanordnungen erstellt werden können.

Gegebenenfalls können die Steckmodule lösbar mit dem Grundmodul verbindbar sein, so daß ein bereits vorhandenes, auf das Grundmodul aufgestecktes Steckmodul nachträglich wieder entfernt und gegebenen falls gegen ein anderes Steckmodul ausgetauscht werden kann. Die lösbare Verbindung zwischen Grund- und Steckmodul ermöglicht aber auch einen einfachen Werkstattservice, falls ein Steckmodul einmal aufgrund eines Defekts ausfallen sollte. In diesem Fall braucht das entsprechende Steckmodul nur von dem Grundmodul abgezogen und durch ein gleiches, funktionsfähiges Steckmodul ersetzt zu werden.

Das Grundmodul kann auch mehrere Steckverbindungsteile aufweisen, so daß dann mehrere Steckmodule gleichzeitig auf das Grundmodul aufgesteckt sein können. Dadurch kann eine noch größere Anzahl unterschiedlich ausgestatteter Funktionsbaugruppenanordnungen erreicht werden.

Die elektrischen Verbindungen zwischen dem Steckverbindungsteil und dem Gegensteckverbindungsteil erfolgen vorzugsweise über an dem Steckverbindungsteil vorgesehene elektrische Anschlußkontakte, die in Verbindungsstellung elektrischen Gegenkontakten des Gegensteckverbindungsteiles zugewandt sind und diese kontaktieren.

Bei einer vorteilhaften Ausführungsform der Erfindung ist das Grundmodul als Innenleuchte ausgebildet. Das Grundmodul bildet dann selbst eine Funktionsbaugruppe, wodurch ein zusätzliches Steckmodul für die in praktisch jedem Kraftfahrzeug benötigte Innenleuchte eingespart werden kann.

Vorteilhaft ist, wenn das Steckverbindungsteil an einer Stirnseitenfläche des Grundmoduls und das Gegensteckverbindungsteil an einer Stirnseitenfläche des Steckmoduls angeordnet sind, und wenn bei in Verbindungstellung befindlichem, mit seiner Stirnseitenfläche der Stirnseitenfläche des Grundmoduls zugewandtem Gegensteckverbindungsteil das Gehäuse des Steckmoduls eine seitliche, im Sichtbereich liegende Fortsetzung des Grundmodules bildet. Dabei wird unter einer Stirnseitenfläche eine Seitenfläche verstanden, die quer zur Erstreckungsebene der Funktionsbaugruppenanordnung verläuft und insbesondere eine Schmalseite des Grund- oder eines Steckmoduls bildet. Die unterschiedlichen Module sind also seitlich nebeneinander angeordnet, wodurch sich eine besonders flache Funktionsbaugruppenanordnung ergibt, die bei einer Montage an der Innenseite des Dachs eines Kraftfahrzeugs eine entsprechend große Kopffreiheit für die Fahrgäste ermöglicht. Gegebenenfalls kann die Funktionsbaugruppenanordnung ganz oder teilweise in den Dachhimmel des Kraftfahrzeugs eingelassen sein.

Besonders vorteilhaft ist, wenn wenigstens eines der mit dem Grundmodul verbindbaren Steckmodule als Zwischenmodul ausgebildet ist, das zumindest ein Steckverbindungsteil zum direkten elektrischen und mechanischen Verbinden dieses Zwischenmoduls mit zumindest einem weiteren Steckmodul aufweist, und wenn dieses weitere Steckmodul ein zu dem Steckverbindunsteil des Zwischenmodul passendes, auf dieses Steckverbindunsteil aufsteckbares Gegensteckverbindungsteil aufweist. Das Zwischenmodul hat also wenigstens ein, auf das Steckverbinmdungsteil des Grundmoduls oder eines weiteren Zwischenmoduls aufsteckbares Gegensteckverbindungsteil und zu- sätzlich noch mindestens ein Steckverbindungsteil, das mit dem Gegensteckverbindungsteil eines Steckmoduls oder eines anderen Zwischenmoduls verbindbar ist. Dabei können die elektrischen Anschlußkontakte des Steckverbindungsteils des Zwischenmoduls gegebenenfalls über Verbindungsleitungen mit den elektrischen Gegenkontakten des an dem Zwischenmodul vorgesehenen Gegensteckverbindungsteils verbunden sein. In vorteilhafter Weise ermöglicht das Zwischenmodul eine Aneinanderreihung mehrerer Steckbeziehungsweise Zwischenmodule, wodurch an dem Grundmodul Steckverbindungsteile eingespart werden können. Das Gegensteckverbindungsteil des mit dem Zwischenmodul kuppelbaren Steckmoduls kann gegebenenfalls zu dem Steckverbindungsteil des Grundmoduls passend ausgebildet sein, so daß dieses Steckmodul wahlweise direkt mit dem Grundmodul oder indirekt über wenigstens ein Zwischenmodul mit dem Grundmodul verbindbar ist. Bei Steckmodulen, deren elektrische und/oder elektronische Funktion das Vorhandensein eines Zwischenmodules voraussetzt, können die Gegensteckverbindungsteile des Steckmoduls und des Zwischenmoduls aber auch unterschiedlich ausgebildet sein, so daß das Steckmodul zwar auf das Zwischenmodul, nicht jedoch auf das Grundmodul aufgesteckt werden kann.

Bei einer vorteilhaften Ausführungsform der Erfindung ist vorgesehen, daß das Grundmodul und das (die) daran angeschlossene(n) Steckmodul(e) über ein Bussystem miteinander verbunden sind, daß das Bussystem in dem Grundmodul und dem (den) Steckmodul(en) jeweils ein Bussteuergerät aufweist, und daß diese Bussteuergeräte über wenigstens eine über das (die) Steckverbindungsteil(e) und das (die) Gegensteckverbindungsteil(e) geführte Busleitung miteinander verbunden sind. Dabei können über die Busleitungen Adressen zum Auswählen einer Funktionseinheit und/oder Daten zwischen den Funktionseinheiten übermittelt werden, wobei die Busleitungen von mehreren oder sogar von allen Funktionseinheiten gemeinsam genutzt werden können. Dadurch kann die Anzahl der Anschlußkontakte des Steckverbindungsteiles beziehungsweise der Gegenkontakte des Gegensteckverbindungsteiles insbesondere bei den Zwischenmodulen entsprechend reduziert sein. Außerdem ermöglicht das Bussystem eine einfache Leitungsführung der Busleitungen, die beispielsweise parallel zueinander verlaufen können. Vorteilhaft ist, wenn wenigstens ein Steckverbindungsteil vorzugsweise innerhalb seiner Umrißform angeordnete elektrische Anschlußbuchsen aufweist, und wenn an dem (den) Gegensteckverbindungsteil(en) Steckkontakte vorgesehen sind, die in Verbindungsstellung die ihnen zugewandten Anschlußbuchsen des Steckverbindungsteiles kontaktieren. Die innerhalb der Umrißform angeordneten Anschlußbuchsen des Steckverbindungsteils sind dann bei in Offenstellung befindlichem Steckverbindungsteil optisch nicht oder praktisch nicht sichtbar und sind außerdem in dem Steckverbindungsteil vor Beschädigung geschützt.

Bei einer Ausführungsform der Erfindung ist benachbart zu dem am Dachhimmel angeordneten Grundmodul ein entfernbarer, an die Umrißform eines Steckmoduls angepaßter Dachhimmelbereich vorgesehen, wobei an der Umrißlinie dieses Dachhimmelbereichs insbesondere eine Sollbruchstelle angeordnet ist, mittels welcher der Dachhimmelbereich aus dem Dachhimmel herausbrechbar ist. Aus dem Dachhimmel kann dann zum Einbau eines Steckmoduls ein an die Form des Steckmoduls angepaßter Bereich herausgetrennt werden, so daß das Steckmodul ganz oder teilweise in den Dachhimmel eingelassen werden kann. Um das Heraustrennen des Dachhimmelbereichs zu erleichtern, kann entlang der Umrißlinie des Dachhimmelbereichs eine Perforation und/oder eine Wandungsschwächung vorgesehen sein.

Vorteilhaft ist, wenn das Steckmodul wenigstens eine Befestigungsstelle zum Befestigen des Steckmoduls am Dachhimmel und/oder an der Fahrzeugkarosserie aufweist. Das Steckmodul kann dann außer an der Steckverbindung auch noch an wenigstens einer weiteren Stelle an dem Kraftfahrzeug befestigt werden.

Zweckmäßigerweise weist das Steckmodul zumindest ein Bedienelement, insbesondere einen Taster und/oder einen Schalter auf. Das Bedienelement kann beispielsweise zum Betätigen einer Leseleuchte, einer zusätzlichen Innenleuchte oder zum Steuern anderer Einrichtungen des Kraftfahrzeugs vorgesehen sein. Das Steckmodul kann aber auch als optisches und/oder akustisches Widergabemodul ausgebildet sein. Dieses kann beispielsweise einen Lautsprecher, eine Uhr, eine alphanumerische Anzeige und/oder einen Videomonitor umfassen. Das Steckmodul kann aber auch zumindest einen Sensor aufweisen, insbesondere ein Mikrophon für ein Telefon und/oder eine Spracheingabeeinheit. Auch kann ein Sensor zur Messung der Helligkeit im Innenraum des Fahrzeugs, ein Infrarotempfänger und/oder ein Temperatursensor vorgesehen sein.

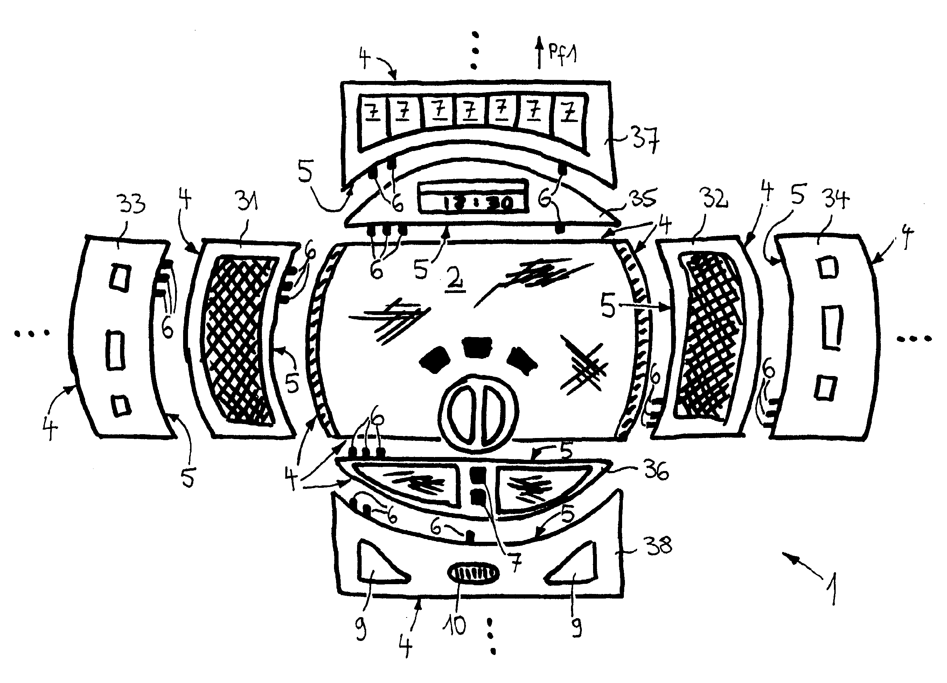

Nachfolgend ist ein Ausführungsbeispiel der Erfindung anhand der Zeichnung näher erläutert.
Die einzige Figur zeigt eine schematisch dargestellte Aufsicht auf die erfindungsgemäße Funktionsbaugruppenanordnung, wobei die Steckmodule jeweils in Vormontagestellung dargestellt sind, in der sie aufeinander aufgesteckt werden können.

Eine im ganzen mit 1 bezeichnete Funktionsbaugruppenanordnung weist mehrere elektrische und/oder elektronische Funktionseinheiten auf, nämlich ein als Innenleuchte ausgebildetes Grundmodul 2 sowie mehrere damit verbindbare Steckmodule 31, 32, 33, 34, 35, 36, 37, 38. Das Grundmodul 2 hat an seinen Schmalseitenflächen mehrere Steckverbindungsteile 4. An den Steckmodulen 31, 32, 33, 34, 35, 36, 37, 38 ist jeweils wenigstens ein zu dem Steckverbindungsteil 4 passendes Gegensteckverbindungsteil 5 vorgesehen, das zum direkten elektrischen und mechanischen Verbinden des Steckmoduls 31, 32, 33, 34, 35, 36, 37, 38 mit dem Grundmodul 2 auf das Steckverbindungsteil 4 aufsteckbar ist. Wie in der Zeichnung erkennbar ist, weisen die Gegensteckverbindungsteile 5 jeweils mehrere Vorsprünge 6 auf, die in Verbindungsstellung in dazu passende Vertiefungen des Steckverbindungsteiles 4 eingreifen und eine formschlüssige Kupplung bilden.

Die in dem Steckverbindungsteil 4 befindlichen Vertiefungen sind als elektrische Anschlußkontakte und die an den Gegensteckverbindungsteilen 5 angeordneten Vorsprünge 6 als elektrische Gegenkontakte ausgebildet, die bei auf das Steckverbindungsteil 4 aufgestecktem Gegensteckverbindungsteil 5 die Anschlußkontakte des Steckverbindungsteils 4 kontaktieren. Dadurch wird einerseits eine mechanische und andererseits aber auch eine elektrische Verbindung zwischen den Modulen hergestellt.

Die Steckverbindungsteile 4 des Grundmoduls 2 sind jeweils an einer Stirnseitenfläche des Grundmoduls 2 und das Gegensteckverbindungsteil 5 an einer Stirnseitenfläche des Steckmoduls 31, 32, 33, 34, 35, 36, 37, 38 angeordnet. In der Zeichnung ist erkennbar, daß das Grundmodul 2 insgesamt vier Steckverbindungsteile 4 aufweist, von denen jeweils zwei an einander abgewandt gegenüberliegenden Seitenflächen angeordnet sind. In Montagestellung weist eine dieser Seitenflächen in Fahrtrichtung des Kraftfahrzeugs, eine entgegen der Fahrtrichtung und die beiden anderen quer zur Fahrtrichtung.

Bei in Verbindungsstellung befindlichem, mit seiner Stirnseitenfläche der Stirnseitenfläche des Grundmoduls 2 zugewandtem Gegensteckverbindungsteil 4 bildet das Gehäuse des Steckmoduls 31, 32, 33, 34, 35, 36, 37, 38 jeweils eine im Sichtbereich liegende, seitliche Fortsetzung des Gehäuses des Grundmoduls 2. Dabei schließen die Gehäuse des Grundmoduls 2 und des Steckmoduls 31, 32, 33, 34, 35, 36, 37, 38 bündig aneinander an und bilden optisch eine Einheit, die wie ein durchgehendes, einstückiges Gehäuse wirkt.

In der Zeichnung ist erkennbar, daß die an das Grundmodul 2 angrenzenden Steckmodule 31, 32, 35, 36, jeweils als Zwischenmodul ausgebildet sind, die jeweils an einer dem Grundmodul 2 zugewandten inneren Seitenfläche ein Gegensteckverbindungsteil 5 und an ihrer dem Grundmodul 2 abgewandten äußeren Seitenfläche ein Steckverbindungsteil 4 aufweisen. Dabei ist das an der inneren Seitenfläche befindliche Gegensteckverbindungsteil 5 mit dem Steckverbindungsteil 4 des Grundmoduls 2 und das an der äußeren Seitenfläche befindliche Steckverbindungsteil 4 mit dem Gegensteckverbindungsteil eines weiteren Steckmoduls 31, 32, 33, 34, 35, 36, 37, 38 verbindbar. Dieses kann seinerseits als Zwischenmodul ausgebildet sein, so daß weitere Steckmodule 31, 32, 33, 34, 35, 36, 37, 38 aufgesteckt und zu einer Reihe mit mehreren in der Erstreckungsebene der Funktionsbaugruppenanordnung 1 nebeneinander befindlichen Modulen miteinander verbunden werden können. Die als elektrische Kontakte ausgebildeten Vorsprünge 6 der Gegensteckverbindungsteile 5 einerseits und die diesen zugeordneten, als Kontaktbuchsen ausgebildeten Vertiefungen der Steckverbindungs- teile 4 andererseits sind jeweils im gleichen Raster angeordnet.

Bei den in der Zeichnung in der quer zu der durch den Pfeil Pf1 markierten Fahrtrichtung des Kraftfahrzeugs in einer Reihe nebeneinander angeordneten Steckmodule 31, 32, 33, 34 sind die Steckverbindungsteile 4 und die Gegensteckverbindungsteile 5 der einzelnen Steckmodule 31, 32, 33, 34 jeweils etwa komplementär zueinander ausgebildet. Dabei entsprechen die Steckverbindungsteile 4 der Steckmodule 31, 32, 33, 34 etwa den quer zur Fahrtrichtung weisenden Steckverbindungsteilen 4 des Grundmoduls 2, so daß die Module 2, 31, 32, 33, 34 in beliebiger Reihenfolge aufeinander gesteckt werden können.

Bei den in der in Fahrtrichtung verlaufenden Reihe hintereinander angeordneten Steckmodulen 35, 36, 37, 38 sind die Steckverbindungsteile 4 und die Gegensteckverbindungsteile 5 von Steckmodulen 35, 36, 37, 38 mit unterschiedlichen elektrischen und/oder elektronischen Funktionen jeweils unterschiedlich ausgebildet. So weisen beispielsweise die zu dem Grundmodul 2 benachbarten Steckmodule 35, 36 jeweils ein zu den geraden Steckverbindungsteilen 4 des Grundmoduls 2 passendes gerades Gegensteckverbindungsteil 5 auf, während das Steckverbindungsteil 4 dieser Steckmodule 35, 36 in der Erstreckungsebene der Funktionsbaugruppenanordnung 1 jeweils etwa bogenförmig konvex gekrümmt ist. Die Gegenverbindungsteile 5 der äußeren Steckmodule 37, 38 sind auf die Steckverbindungsteile 4 der Steckmodule 35, 36 aufsteckbar und weisen dazu eine zu der Krümmung dieser Steckverbindungsteile 4 passende konkave Krümmung auf. Die Reihenfolge der in der in Fahrtrichtung verlaufenden Reihe hintereinander angeordneten Module 2, 35, 36, 37, 38 ist somit durch die Geometrie der Steck- und Gegensteckverbindungsteile 4, 5 dieser Steckmodule 35, 36, 37, 38 und die Geometrie der in beziehungsweise entgegen der Fahrtrichtung PF1 weisenden Steckverbindungsteile 4 des Grundmoduls 2 vorgegeben.

Das Grundmodul 2 und die Steckmodule 31, 32, 33, 34, 35, 36, 37, 38 sind über ein Bussystem miteinander verbunden, das in dem Grundmodul 2 und in den Steckmodulen 31, 32, 33, 34, 35, 36, 37, 38 jeweils ein Steuergerät zur Generierung und Auswertung der über den Bus übertragenen elektrischen Signale aufweist. Die Bussteuergeräte sind jeweils über Busleitungen mit den elektrischen Kontakten des Steckverbindungsteiles 4 und/oder des Gegensteckverbindungsteiles 5 des betreffenden Moduls 2, 31, 32, 33, 34, 35, 36, 37, 38 verbunden. Über die Busleitungen werden die für eine Kommunikation zwischen den einzelnen Modulen 2, 31, 32, 33, 34, 35, 36, 37, 38 erforderlichen Adress- und/oder Datensignale übertragen. Das Bussystem kann beispielsweise ein Feldbus sein.

Das Bussteuergerät des Grundmoduls 2 ist mit einer in dem Grundmodul 2 befindlichen zentralen Steuer- und Auswerteeinrichtung verbunden, die beispielsweise einen Mikrocomputer aufweisen kann.

Die Steckmodule 36, 37 weisen Bedienelemente auf, nämlich Tasten oder Schalter 7 zum Betätigen einer Leseleuchte 8 oder von anderen elektrischen oder elektronischen Funktionen des Kraftfahrzeugs. Das Steckmodul 38 ist als Telefon-Freisprecheinrichtung ausgebildet und hat Lautsprecher 9 und ein Mikrophon 10. Das Steckmodul 38 ist ein optisches Wiedergabemodul mit einem Display, auf dem Beispielsweise die Urzeit angezeigt werden kann. Die Steckmodule 31, 32 weisen jeweils wenigstens einen Sensor auf.

Erwähnt werden soll noch, daß zum Abdecken von Steckverbindungsteilen 4, auf die kein Steckmodul 31-38 aufgesteckt ist, mit einer Abdeckung versehen sein können, die beispielsweise auf das Steckverbindungsteil 4 aufgesteckt sein kann.

Die Erfindung betrifft somit einen Bausatz zum Erstellen einer an der Innenseite eines Kraftfahrzeuges, insbesondere am Dachhimmel, anbringbaren Funktionsbaugruppenanordnung 1. Diese weist eine Innenleuchte und wenigstens eine weitere elektrische und/oder elektronische Funktionseinheiten auf. Die Innenleuchte ist als Grundmodul 2 ausgebildet, das an wenigstens einer Seite zumindest ein Steckverbindungsteil 4 zum direkten elektrischen und mechanischen Verbinden dieses Grundmodules 2 mit zumindest einer weiteren Funktionseinheit aufweist. Diese weitere Funktionseinheit ist als Steckmodul 31, 32, 33, 34, 35, 36, 37 mit einem zu dem Steckverbindungsteil 4 des Grundmoduls 2 passenden, auf dieses Steckverbindungsteil 4 aufsteckbaren Gegensteckverbindungsteil 5 ausgebildet.

## Patentansprüche

1. Funktionsbaugruppenanordnung (1) zum Anbringen an der Innenseite eines Kraftfahrzeuges, insbesondere am Dachhimmel, wobei die Funktionsbaugruppenanordnung (1) wenigstens zwei unterschiedliche elektrische und/oder elektronische Funktionsbaugruppen aufweist, von denen zumindest eine als Innenleuchte ausgebildet ist, **dadurch gekennzeichnet, daß** die Funktionsbaugruppenanordnung ein Grundmodul (2) hat, das an wenigstens einer Seite zumindest ein Steckverbindungsteil (4) aufweist und daß zumindest eine der Funktionsbaugruppen zum direkten elektrischen und mechanischen Verbinden mit dem Grundmodul (2) als Steckmodul (31, 32, 33, 34, 35, 36, 37, 38) mit einem zu dem Steckverbindungsteil (4) des Grundmoduls (2) passenden, auf dieses Steckverbindungsteil (4) aufsteckbaren Gegensteckverbindungsteil (5) ausgebildet ist.

2. Funktionsbaugruppenanordnung (1) nach Anspruch 1, **dadurch gekennzeichnet, daß** das Grundmodul (2) als Innenleuchte ausgebildet ist.

3. Funktionsbaugruppenanordnung (1) nach Anspruch 1 oder 2, **dadurch gekennzeichnet, daß** das Steckverbindungsteil (4) an einer Stirnseitenfläche des Grundmoduls (2) und das Gegensteckverbindungsteil (5) an einer Stirnseitenfläche des Steckmoduls (31, 32, 33, 34, 35, 36, 37, 38) angeordnet sind, und daß bei in Verbindungsstellung befindlichem, mit seiner Stirnseitenfläche der Stirnseitenfläche des Grundmoduls (2) zugewandtem Gegensteckverbindungsteil (5) das Gehäuse des Steckmoduls (31, 32, 33, 34, 35, 36, 37, 38) eine seitliche, im Sichtbereich liegende Fortsetzung des Grundmodules (2) bildet.

4. Funktionsbaugruppenanordnung (1) nach einem der Ansprüche 1 bis 3, **dadurch gekennzeichnet, daß** wenigstens eines der mit dem Grundmodul (2) verbindbaren Steckmodule (31, 32, 33, 34, 35, 36, 37, 38) als Zwischenmodul ausgebildet ist, das zumindest ein Steckverbindungsteil (4) zum direkten elektrischen und mechanischen verbinden dieses Zwischenmoduls mit zumindest einem weiteren Steckmodul (31, 32, 33, 34, 35, 36, 37, 38) aufweist, und daß dieses weitere Steckmodul (31, 32, 33, 34, 35, 36, 37, 38) ein zu dem Steckverbindungsteil (4) des Zwischenmoduls passendes, auf dieses Steckverbindungsteil (4) aufsteckbares Gegensteckverbindungsteil (5) aufweist.

5. Funktionsbaugruppenanordnung (1) nach einem der Ansprüche 1 bis 4, **dadurch gekennzeichnet, daß** das Grundmodul (2) und das (die) daran angeschlossene(n) Steckmodul(e) (31, 32, 33, 34, 35, 36, 37, 38) über ein Bussystem miteinander verbunden sind, daß das Bussystem in dem Grundmodul (2) und dem (den) Steckmodul(en) (31, 32, 33, 34, 35, 36, 37, 38) jeweils ein Bussteuergerät aufweist, und daß diese Bussteuergeräte über wenigstens eine über das (die) Steckverbindungsteil(e) (4) und das (die) Gegensteckverbindungsteil(e) (5) geführte Busleitung miteinander verbunden sind.

6. Funktionsbaugruppenanordnung (1) nach einem der Ansprüche 1 bis 5, **dadurch gekennzeichnet, daß** wenigstens ein Steckverbindungsteil (31, 32, 33, 34, 35, 36, 37, 38) vorzugsweise innerhalb seiner Umrißform angeordnete elektrische Anschlußbuchsen aufweist, und daß an dem (den) Gegensteckverbindungsteil(en) (5) Steckkontakte vorgesehen sind, die in Verbindungsstellung die ihnen zugewandten Anschlußbuchsen des Steckverbindungsteiles (4) kontaktieren.

7. Funktionsbaugruppenanordnung (1) nach einem der Ansprüche 1 bis 6, **dadurch gekennzeichnet, daß** benachbart zu dem am Dachhimmel angeordneten Grundmodul (2) ein entfernbarer, an die Umrißform eines Steckmoduls (31, 32, 33, 34, 35, 36, 37, 38) angepaßter Dachhimmelbereich vorgesehen ist und daß an der Umrißlinie dieses Dachhimmelbereichs insbesondere eine Sollbruchstelle angeordnet ist, mittels welcher der Dachhimmelbereich aus dem Dachhimmel herausbrechbar ist.

8. Funktionsbaugruppenanordnung (1) nach einem der Ansprüche 1 bis 7, **dadurch gekennzeichnet, daß** das Steckmodul (31, 32, 33, 34, 35, 36, 37, 38) wenigstens eine Befestigungsstelle zum Befestigen des Steckmoduls (31, 32, 33, 34, 35, 36, 37, 38) am Dachhimmel und/oder an der Fahrzeugkarosserie aufweist.

9. Funktionsbaugruppenanordnung (1) nach einem der Ansprüche 1 bis 8, **dadurch gekennzeichnet, daß** wenigstens ein Steckmodul (31, 32, 33, 34, 35, 36, 37, 38) zumindest ein Bedienelement, insbesondere einen Taster und/oder einen Schalter (7) aufweist.

10. Funktionsbaugruppenanordnung (1) nach einem der Ansprüche 1 bis 9, **dadurch gekennzeichnet, daß** wenigstens ein Steckmodul (31, 32, 33, 34, 35, 36, 37, 38) als optisches und/oder aktustisches Wiedergabemodul ausgebildet ist.

11. Funktionsbaugruppenanordnung (1) nach einem der Ansprüche 1 bis 10, **dadurch gekennzeichnet, daß** wenigstens ein Steckmodul (31, 32, 33, 34, 35, 36, 37, 38) zumindest einen Sensor aufweist, insbesondere ein Mikrofon (10) für ein Telefon und/oder ein Spracheinabegerät.

## Claims

1. Functional assembly arrangement (1) for mounting on the inside of a motor vehicle, particularly on the roof interior, wherein the functional assembly arrangement (1) has at least two different electrical and/or electronic functional assemblies, at least one of which is designed as an interior light, **characterised in that** the functional assembly arrangement has a base module (2) which comprises at least one plug-type connector (4) at least on one side, and **in that** at least one of the functional assemblies is designed for direct electrical and mechanical connection to the base module (2) as a plug-in module (31, 32, 33, 34, 35, 36, 37, 38) having a mating plug connector (5) which fits the plug-type connector (4) of the base module (2) and can be pushed onto this plug-type connector (4).

2. Functional assembly arrangement (1) according to claim 1, **characterised in that** the base module (2) is constructed as an interior light.

3. Functional assembly arrangement (1) according to claim 1 or 2, **characterised in that** the plug-type connector (4) is mounted on an end face of the base module (2) and the mating plug-type connector (5) is mounted on an end face of the plug-in module (31, 32, 33, 34, 35, 36, 37, 38), and that when the mating plug-type connector (5) is in the connected position, with its end face towards the end face of the base module (2), the housing of the plug-in module (31, 32, 33, 34, 35, 36, 37, 38) forms a lateral extension of the base module (2) which is located within the visible area.

4. Functional assembly arrangement (1) according to one of claims 1 to 3, **characterised in that** at least one of the plug-in modules (31, 32, 33, 34, 35, 36, 37, 38) which is connectable with the base module (2) is constructed as an intermediate module which comprises at least one plug-type connector (4) for directly electrically and mechanically connecting this intermediate module to at least one other plug-in module (31, 32, 33, 34, 35, 36, 37, 38), and **in that** this further plug-in module (31, 32, 33, 34, 35, 36, 37, 38) comprises a mating plug-type connector (5) which fits the plug-type connector (4) of the intermediate module and can be pushed onto this plug-type connector (4).

5. Functional assembly arrangement (1) according to one of claims 1 to 4, **characterised in that** the base module (2) and the plug-in module or modules (31, 32, 33, 34, 35, 36, 37, 38) attached thereto are connected to one another by a bus system, **in that** the bus system comprises a bus control device in the base module (2) and in the plug-in module or modules (31, 32, 33, 34, 35, 36, 37, 38), and **in that** these bus control devices are connected to one another via at least one bus highway passing through the plug-type connector or connectors (4) and the mating plug-type connector or connectors (5).

6. Functional assembly arrangement (1) according to one of claims 1 to 5, **characterised in that** at least one plug-type connector (31, 32, 33, 34, 35, 36, 37, 38) comprises electrical connector sockets preferably disposed inside its outer contour, and **in that** plug contacts are provided on the mating plug-type connector or connectors, which in the connecting position make contact with the connector sockets of the plug-type connector (4) facing them.

7. Functional assembly arrangement (1) according to one of claims 1 to 6, **characterised in that** adjacent to the base module (2) mounted on the roof interior is a removable roof section adapted to the contour of a plug-in module (31, 32, 33, 34, 35, 36, 37, 38) and **in that** along the contour line of this roof section is provided, in particular, a frangible area by means of which the roof section can be detached from the roof interior.

8. Functional assembly arrangement (1) according to one of claims 1 to 7, **characterised in that** the plug-in module (31, 32, 33, 34, 35, 36, 37, 38) has at least one point of attachment for fixing the plug-in module (31, 32, 33, 34, 35, 36, 37, 38) to the roof interior and/or to the vehicle body.

9. Functional assembly arrangement (1) according to one of claims 1 to 8, **characterised in that** at least one plug-in module (31, 32, 33, 34, 35, 36, 37, 38) comprises at least one operating element, particularly a button and/or a switch (7).

10. Functional assembly arrangement (1) according to one of claims 1 to 9, **characterised in that** at least one plug-in module (31, 32, 33, 34, 35, 36, 37, 38) is constructed as an optical and/or acoustic indicator module.

11. Functional assembly arrangement (1) according to one of claims 1 to 10, **characterised in that** at least one plug-in module (31, 32, 33, 34, 35, 36, 37, 38) comprises at least one sensor, particularly a microphone (10) for a telephone and/or a speech input device.

## Revendications

1. Arrangement de composants fonctionnels (1) destiné à être monté sur le côté intérieur d'un véhicule automobile, en particulier au plafond, l'arrangement de composants fonctionnels (1) comportant au moins deux composants fonctionnels différents électriques et/ou électroniques, parmi lesquels au moins un est réalisé sous forme d'éclairage intérieur, **caractérisé en ce que** l'arrangement de composants fonctionnels (1) comporte un module de base (2) qui, sur au moins un côté, est muni d'au moins un élément d'enfichage (4) et **en ce qu'**au moins un des groupes fonctionnels, en vue d'une liaison électrique et mécanique directe avec le module de base (2), est réalisé sous forme de module à enficher (31, 32, 33, 34, 35, 36, 37, 38) muni d'un élément complémentaire d'enfichage (5), adapté à l'élément d'enfichage (4) du module de base (2) et destiné à être enfiché sur cet élément d'enfichage (4).

2. Arrangement de composants fonctionnels (1) selon la revendication 1, **caractérisé en ce que** le module de base (2) est réalisé sous forme d'éclairage intérieur.

3. Arrangement de composants fonctionnels (1) selon la revendication 1 ou 2, **caractérisé en ce que** l'élément d'enfichage (4) est situé sur une face latérale frontale du module de base (2) et l'élément complémentaire d'enfichage (5) sur une face latérale frontale du module à enficher (31, 32, 33, 34, 35, 36, 37, 38), et **en ce que**, lorsque l'élément complémentaire d'enfichage (5) est dans la position assemblée avec sa face latérale frontale orientée vers la face latérale frontale du module de base (2), le boîtier du module à enficher (31, 32, 33, 34, 35, 36, 37, 38) forme un prolongement latéral du module de base (2), situé dans la zone visible.

4. Arrangement de composants fonctionnels (1) selon l'une quelconque des revendications 1 à 3, **caractérisé en ce qu'**au moins un des modules à enficher (31, 32, 33, 34, 35, 36, 37, 38), destinés à être assemblés au module de base (2), est réalisé sous forme de module intercalaire, qui comporte au moins un élément d'enfichage (4) pour la liaison électrique et mécanique directe de ce module intercalaire avec au moins un autre module à enficher (31, 32, 33, 34, 35, 36, 37, 38), et **en ce que** cet autre module à enficher (31, 32, 33, 34, 35, 36, 37, 38) comporte un élément complémentaire d'enfichage (5) adapté à l'élément d'enfichage (4) du module intercalaire et apte à être enfiché sur cet élément d'enfichage (4).

5. Arrangement de composants fonctionnels (1) selon l'une quelconque des revendications 1 à 4, **caractérisé en ce que** le module de base (2) et le (les) module(s) à enficher (31, 32, 33, 34, 35, 36, 37, 38), raccordé(s) à celui-ci, sont reliés entre eux via un système de bus, **en ce que** le système de bus dans le module de base (2) et le (les) module(s) à enficher (31, 32, 33, 34, 35, 36, 37, 38) comporte dans chaque cas un composant de commande du bus, et **en ce que** ces composants de commande du bus sont reliés entre eux via au moins une ligne de bus passant par l'(les) élément(s) d'enfichage (4) et l' (les) élément(s) complémentaire(s) d'enfichage (5).

6. Arrangement de composants fonctionnels (1) selon l'une quelconque des revendications 1 à 5, **caractérisé en ce qu'**au moins un élément d'enfichage (4) comporte des douilles de raccord électriques, agencées de préférence à l'intérieur de sa ligne de contour, et **en ce que** sur l' (les) élément(s) complémentaire(s) d'enfichage (5) sont prévus des contacts à enficher qui, dans la position assemblée, établissent le contact avec les douilles de raccord, orientées vers ceux-ci, de l'élément d'enfichage (4).

7. Arrangement de composants fonctionnels (1) selon l'une quelconque des revendications 1 à 6, **caractérisé en ce que**, à proximité du module de base (2), agencé au plafond, est prévue une zone de plafond extractible, adaptée à la forme du contour d'un module à enficher (31, 32, 33, 34, 35, 36, 37, 38), et **en ce que** sur la ligne de contour de cette zone de plafond est située en particulier une ligne destinée à rupture, au moyen de laquelle la zone de plafond peut être extraite du plafond.

8. Arrangement de composants fonctionnels (1) selon l'une quelconque des revendications 1 à 7, **caractérisé en ce que** le module à enficher (31, 32, 33, 34, 35, 36, 37, 38) comporte au moins une zone de fixation pour fixer le module à enficher (31, 32, 33, 34, 35, 36, 37, 38) sur le plafond et/ou sur la carrosserie du véhicule.

9. Arrangement de composants fonctionnels (1) selon l'une quelconque des revendications 1 à 8, **caractérisé en ce qu'**au moins un module à enficher (31, 32, 33, 34, 35, 36, 37, 38) comporte au moins un élément de commande, en particulier une touche et/ou un interrupteur (7).

10. Arrangement de composants fonctionnels (1) selon l'une quelconque des revendications 1 à 9, **caractérisé en ce qu'**au moins un module à enficher (31, 32, 33, 34, 35, 36, 37, 38) est réalisé sous forme de module de transmission optique et/ou acoustique.

11. Arrangement de composants fonctionnels (1) selon l'une quelconque des revendications 1 à 10, **caractérisé en ce qu'**au moins un module à enficher (31, 32, 33, 34, 35, 36, 37, 38) comporte au moins un capteur, en particulier un microphone (10) pour un téléphone et/ou un composant d'entrée de voix.
